# EUROPÄISCHE PATENTSCHRIFT

(11) **EP 3 415 012 B1**
(45) Veröffentlichungstag und Bekanntmachung des Hinweises auf die Patenterteilung: **07.08.2019**
(21) Anmeldenummer: 17175681.0
(22) Anmeldetag: 13.06.2017
(51) Int. Cl.: A22C 11/02

(54) **LEBENSMITTELVERARBEITENDE MASCHINE IN FORM EINER FÜLLMASCHINE ZUR WURSTHERSTELLUNG**
FOOD PROCESSING MACHINE IN THE FORM OF A FILLING MACHINE FOR SAUSAGE PRODUCTION
MACHINE DE TRAITEMENT DE PRODUITS ALIMENTAIRES SOUS FORME DE MACHINE DE REMPLISSAGE DESTINÉE À LA FABRICATION DE SAUCISSES

(43) Veröffentlichungstag der Anmeldung: 19.12.2018
(73) Patentinhaber: Albert Handtmann Maschinenfabrik GmbH & Co. KG, 88400 Biberach (DE)
(72) Erfinder: Maile, Bernd, 88422 Oggelshausen (DE)
(74) Vertreter: Grünecker Patent- und Rechtsanwälte PartG mbB

(56) Entgegenhaltungen:
- EP-B1- 1 837 524
- WO-A1-2010/057969
- DE-A1-102006 033 613
- DE-B3-102010 007 109
- DE-U1-202007 004 721

## Beschreibung

Die Erfindung betrifft eine lebensmittelverarbeitende Maschine, in Form einer Füllmaschine zur Wurstherstellung gemäß dem Oberbegriff des Anspruchs 1. Lebensmittelverarbeitende Maschinen sind aus dem Stand der Technik, beispielsweise der EP 1 837 524 B1 wohlbekannt. Maschinen und Geräte für lebensmittelverarbeitende Betriebe bestehen in produktführenden Bereichen zum großen Teil aus Edelstahlkomponenten. Solche Bauteile sind beständig, robust und lassen sich einfach und zuverlässig reinigen, so dass den hohen Hygieneanforderungen im Bereich der Lebensmittelfertigung Rechnung getragen werden kann. Aus verschiedenen Gründen kommen jedoch häufig, ergänzend oder alternativ zu Edelstahl, auch andere Werkstoffe, auch in den produktführenden Bereichen, zur Anwendung. Hier handelt es sich meist um Werkstoffe aus der Gruppe der Kunststoffe bzw. Elastomere, die bestimmte technische Eigenschaften aufweisen, beispielsweise bestimmte funktionelle Eigenschaften (z.B. Abdichtung), technische Eigenschaften (z. B. Gleiteigenschaften), optische Eigenschaften (z.B. Farbgestaltung) oder aber eine einfache wirtschaftliche Herstellbarkeit mit sich bringen (z.B. Spritzgussverfahren). Der Einsatz von solchen Werkstoffen wie Kunststoff, insbesondere Elastomeren, in Maschinen für lebensmittelverarbeitende Betriebe bringt, beispielsweise im Vergleich zu Edelstahl, neben einer Vielzahl an Vorteilen auch unerwünschte Begleiterscheinungen mit sich. Während Keime, wie Bakterien, Viren, Pilze, Pilzsporen, Amöben, Parasiten und Algen auf gut zu reinigenden Edelstahloberflächen, wie zuvor erläutert, ungünstige Lebensbedingungen vorfinden, können sie beispielsweise auf Kunststoffoberflächen länger überleben bzw. sich stärker vermehren.

Aus diesem Grund können in produktführenden Bereichen, auch wenn Kunststoffbauteile hier technische Vorteile mit sich bringen, solche Kunststoffe nicht immer eingesetzt werden oder bringen eine höhere Anzahl an Reinigungszyklen bzw. aufwändigere Reinigungsverfahren und damit verbundene Nachteile, z. B. Versprödung, mit sich.

Aus dem Stand der Technik ist der DE 20 2007 004 721 U1 bekannt und offenbart eine produktführende Oberfläche eines Wägeautomaten zum Einsatz in der Lebensmittelindustrie.

Aus dem Stand der Technik ist der DE 10 2010 007 109 B3 bekannt und offenbart ein Abdichtungskörper mit einer Beschichtung die eine antimikrobielle Substanz zugesetzt ist.

Aus dem Stand der Technik ist der WO 2010/057969 A1 bekannt und offenbart ein Bauteil mit einer antimikrobiellen Oberfläche.

Ausgehend von diesem Stand der Technik liegt der vorliegenden Erfindung die Aufgabe zugrunde, eine lebensmittelverarbeitende Maschine, in Form einer Füllmaschine zur Wurstherstellung, bereitzustellen, die erlaubt, Kunststoffbauteile mit verbesserten Hygieneeigenschaften in produktführenden Bereichen einzusetzen.

Erfindungsgemäß wird diese Aufgabe durch die Merkmale des Anspruchs 1 gelöst.

Gemäß der vorliegenden Erfindung wird eine lebensmittelverarbeitende Maschine bereitgestellt, in Form einer Füllmaschine zur Wurstherstellung mit einem produktführenden Bereich mit mehreren Bauteilen aus Kunststoff. Erfindungsgemäß ist mindestens ein Bauteil vorgesehen, das einen Kunststoff aufweist, der einen antimikrobiellen Stoff umfasst. Unter produktführendem Bereich versteht man hier den Bereich innerhalb der Maschine inklusive Anbauteile, der direkt mit dem Produkt in Kontakt kommt.

Unter einem antimikrobiellen Stoff versteht man einen Stoff, der die Vermehrungsfähigkeit oder Infektiosität von Mikroorganismen reduzieren oder sie abtöten beziehungsweise inaktivieren kann. Insbesondere sollen gemäß der vorliegenden Erfindung die Zusatzstoffe zumindest antibakteriell wirken.Die hier verwendeten antimikrobiell bzw. antibakteriell wirksamen Stoffe (z.B. Nanometalle, Biozide, antimikrobiell wirkende Sterionen) werden beim täglichen Einsatz der Bauteile kontinuierlich freigesetzt. Der dabei abgegebene Wirkstoff stört zum Beispiel den Stoffwechsel oder greift die Zellstruktur der anhaftenden Mikroorganismen an und wirkt zum Beispiel gegen Bakterien, Viren, Pilze, Pilzsporen, Amöben, Parasiten und Algen und schafft dadurch eine verbesserte Hygienesituation. Durch die Verwendung entsprechender Kunststoffe kann die Verkeimung auf der Oberfläche entsprechender Bauteile wesentlich reduziert werden, was zu einer höheren Produktsicherheit und verbesserten Hygiene führt.

Der antimikrobielle Stoff ist direkt als Zusatz in den Kunststoff bzw. dessen Werkstoffstruktur eingebracht.

Im Bereich der Lebensmittelfertigung werden insbesondere pastöse Massen verarbeitet. Es hat sich gezeigt, dass in diesem Anwendungsbereich zwar der Einsatz von Kunststoffen mit einem antimikrobiellen Stoff die Hygienesituation verbessern kann, jedoch oftmals dennoch nicht optimal ist, da sich die pastösen Massen an dem Kunststoff, insbesondere an einer rauen Fläche des Kunststoffs, festsetzen können.

Der Kunststoff ist mindestens einer aus folgender Gruppe: Thermoplaste, Duroplaste, Elastomere
Gemäß der vorliegenden Erfindung weist nun die Oberfläche des Kunststoffbauteils eine geringe Oberflächenrauhheit in einem Bereich R_{z} < 25 µm, insbesondere von 2 µm bis 8 µm auf. Bei der Rautiefe R_{Z} handelt es sich um den Mittelwert aus Einzelrautiefen von z.B. fünf aufeinanderfolgenden Einzelmessstrecken im Rauheitsprofil. Die maximalen Rautiefen in den entsprechenden Messabschnitten werden addiert und durch die Anzahl der Messabschnitte dividiert. (DIN EN ISO 25178:). Eine solche Oberfläche bringt eine optimierte Hygienesituation mit sich, da die Keime weniger Nährboden und "Versteckmöglichkeiten" in der glatten Oberfläche finden. Auch eine Reinigung einer entsprechend glatten Oberfläche ist einfacher.

In den produktführenden Bereichen von lebensmittelverarbeitenden Maschinen, in Form von Füllmaschinen, werden Kunststoffoberflächen häufig einem Druck ausgesetzt. Oftmals sind in den zu verarbeitenden Lebensmitteln noch kleinere härtere Komponenten vorhanden, die dann die Oberfläche des Kunststoffs zerstören bzw. verkratzen können. Gemäß der vorliegenden Erfindung weist nun die Kunststoffoberfläche zusätzlich eine verbesserte Oberflächenbeständigkeit auf, um dauerhaft eine hohe Oberflächengüte sicherzustellen. So verkratzen diese Oberflächen nicht so schnell wie weiche Oberflächen und bieten demnach auch weniger Möglichkeit für Verschmutzung und Verkeimung in den verkratzten Bereichen. Insbesondere soll die Oberfläche von Thermoplasten dazu eine Härte von 75 bis 90 Shore D aufweisen. Die Härte von Elastomeren soll in einem Bereich von 70 bis 90 Shore A liegen (DIN ISO 7619-1).

Insbesondere eine Kombination von Kunststoffen mit antimikrobiellen Stoffen, einer geringen Oberflächenrauhheit und einer großen Oberflächenhärte in den oben genannten Größenbereichen bringt eine optimale Hygienesituation für Bauteile im produktführenden Bereich mit sich. Selbst wenn die Bauteile starken Belastungen durch Druck und harten Teilen im Lebensmittel ausgesetzt sind, bleibt die Oberfläche ausreichend glatt, so dass sich weniger Lebensmittelreste und Keime an der Oberfläche fangen und die Oberfläche kontaminieren können. Aus diesem Grund kann die Konzentration des antimikrobiellen Stoffs im Kunststoff reduziert werden, was im Bereich der Lebensmittelverarbeitung ein wesentlicher Punkt ist, insbesondere um zu verhindern, dass entsprechende Stoffe auf das Lebensmittel übergehen.

Das Bauteil ist ein Bauteil im produktführenden Bereich, das mit Produkt in Berührung kommen kann und/oder eine Dichtung, die den produktführenden Bereich nach außen abdichtet. So können auch beispielsweise Elastomere, Thermoplaste und Duroplaste eingesetzt werden. Diese dienen beispielsweise als Dichtung, insbesondere im Bereich eines Förderwerks einer Füllmaschine oder insbesondere im Bereich des Fülltrichters der Füllmaschine. Eine solche Dichtung im Bereich des Förderwerks dichtet beispielsweise den Saug- und den Druckbereich des Förderwerks voneinander ab. Bei einer Flügelzellenpumpe werden entsprechende Dichtungen durch den Rotor einem starken Druck ausgesetzt. Insbesondere kann in diesem Bereich pastöse Masse mitgeschleppt werden, die dann auf der Oberfläche der Dichtung anhaften kann. Die Verwendung von antimikrobiellen Stoffen als Zusatz reduziert die Verkeimung an der Oberfläche der entsprechenden Dichtung bzw. Dichtungen. Ist diese Dichtung darüber hinaus noch, wie oben beschrieben, ausreichend glatt und hart, ist die Oberfläche auch sicher durch Beschädigung und Anhaften mitgerissener Partikel geschützt, was die Hygienesituation weiter begünstigt.

Das Bauteil kann auch ein Abstreifer einer Förderkurve im produktführenden Bereich eines Fülltrichters einer Füllmaschine sein. Dieser Abstreifer, der an der Förderkurve befestigt ist, streift pastöse Masse von der Innenfläche des Fülltrichters ab und ist so ebenso wie die zuvor genannte Dichtung dem zu verarbeitenden Lebensmittel und Druck ausgesetzt. Auch hier ist der Einsatz eines Kunstoffs mit antimikrobiellem Stoff vorteilhaft. Ebenso vorteilhaft ist bei dieser Anwendung eine geringe Oberflächenrauigkeit und eine große Härte, wie zuvor beschrieben. Somit kann ein Verkratzen der Oberfläche wirksam verhindert werden, so dass sich keine Keime in der verkratzten Oberfläche ansammeln können.

Gemäß einer bevorzugten Ausführungsform ist der antibakterielle Stoff mindestens einer aus folgender Gruppe: Nanometall, Biozid, antimikrobiell wirksames Sterion.

Als ganz bevorzugt hat sich ein Kunststoff herausgestellt, dem ein antimikrobiell wirksamer Stoff auf Silber-Basis zugesetzt wurde.

Wie zuvor beschrieben, ist die lebensmittelverarbeitende Maschine eine Füllmaschine zur Wurstherstellun.

Die vorliegende Erfindung wird nachfolgend unter Bezugnahme folgender Figuren näher erläutert.
- Fig. 1: zeigt grob schematisch eine Seitenansicht einer Füllmaschine gemäß der vorliegenden Erfindung.
- Fig. 2: zeigt grob schematisch einen Längsschnitt durch einen Teil der Füllmaschine gemäß der vorliegenden Erfindung.
- Fig. 3: zeigt grob schematisch eine Teilansicht eines Querschnitts eines Förderwerks einer Füllmaschine gemäß der vorliegenden Erfindung.
- Fig. 4: zeigt schematisch einen Längsschnitt einer Füllmaschine gemäß einem weiteren Ausführungsbeispiel.

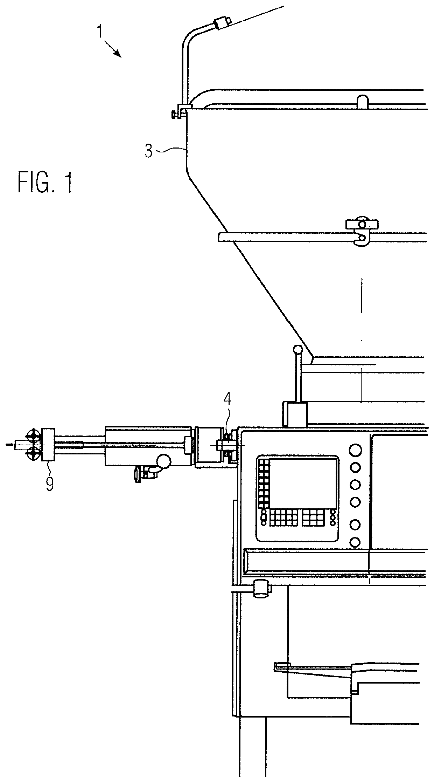

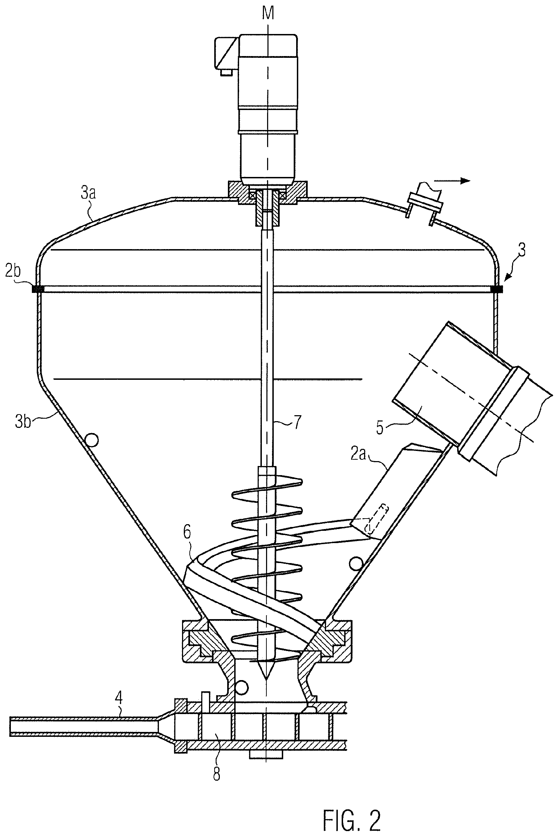

Wie aus Fig. 1 und 2 hervorgeht, weist die erfindungsgemäße Füllmaschine 1 einen Trichter 3 auf, der beispielsweise einen Deckel 3a umfasst, sowie ein zumindest teilweise konisch zulaufendes Trichterteil 3b. Das Trichterteil 3b und der Deckel 3a sind beispielsweise über eine Dichtung 2b miteinander, insbesondere vakuumdicht verbunden. Der Trichter 3 umfasst einen Einlass 5 zum Zuführen von pastöser Masse. Diese pastöse Masse kann beispielsweise über eine Förderkurve 6 und eine optional vorgesehene Förderschnecke 7 in Richtung Förderwerk 8 transportiert werden, wobei hier das Förderwerk beispielsweise eine Flügelzellenpumpe ist. An der Förderkurve 6 befindet sich ein Abstreifer 2a, dessen Außenkante an der Innenfläche des Trichters 3 derart anliegt, dass pastöse Masse bei Drehung der Förderkurve 6 von der Innenfläche des Trichters 3 abgestreift wird. Das Förderwerk 8 kann die pastöse Masse über ein Füllrohr 4 ausstoßen, um eine nicht dargestellte Wursthülle mit pastöser Masse zu befüllen. Nach dem Füllrohr 4 können noch ein oder mehrere Vorsatzgeräte angeordnet sein, wie beispielsweise eine in der Fig. 1 gezeigte Abdreheinrichtung 9 oder beispielsweise ein nicht dargestellter Füllwolf oder eine Coextrusionseinrichtung, eine Aufhängelinie, ein Füllkopf, etc.

Wie zuvor erläutert, gibt es bei der Lebensmittelverarbeitung höchste Hygieneanforderungen. Aus diesem Grund sind in dem produktführenden Bereich der Füllmaschine, der sich hier vom Trichter durch das Förderwerk, das Füllrohr und gegebenenfalls den Vorsatzgeräten erstreckt, Bauteile aus Kunststoff so gefertigt, dass sie einen antimikrobiellen Stoff umfassen. Der antimikrobielle Stoff ist als Zusatz in den Kunststoff eingebracht. Bei diesem Ausführungsbeispiel, wie es in Fig. 2 gezeigt ist, ist beispielsweise der Abstreifer 2a aus einem Kunststoff gefertigt, der einen antimikrobiellen Stoff umfasst. Auch die Dichtung 2b zwischen Trichterdeckel 3a und konischem Trichterteil 3b kann entsprechend ausgebildet sein. Als Kunststoff für den Abstreifer 2a kann beispielsweise ein Thermoplast, wie z.B. POM verwendet werden, dem die antimikrobiell wirksame Substanz mit einer Gewichtskonzentration von 1 - 3 % zugesetzt wurde. Da ein entsprechender Abstreifer 2a Druck und pastöser Masse ausgesetzt ist, hat sich herausgestellt, dass es vorteilhaft ist, wenn neben dem Einsatz des antimikrobiellen Stoffes die Oberflächenrauhheit R_{z} < 25 µm, insbesondere R_{z} 2 µm bis R_{z} 8 µm beträgt und die Oberfläche eine Härte von 75 bis 90 Shore D aufweist. Somit kann ein Verkratzen und Anhaften von pastöser Masse und somit eine Oberflächenkontamination und Verkeimung wirksam reduziert werden. Aus diesem Grund kann auch die Konzentration des antimikrobiellen Stoffs reduziert werden. Für die Dichtung 2b kann als Kunststoff beispielsweise ein Elastomer, z. B. NBR verwendet werden, dem die antimikrobiell wirksame Substanz mit einer Gewichtskonzentration von 1 - 3 % zugesetzt wurde. Auch die Oberfläche der Dichtung 2b kann entsprechend ausgebildet sein.

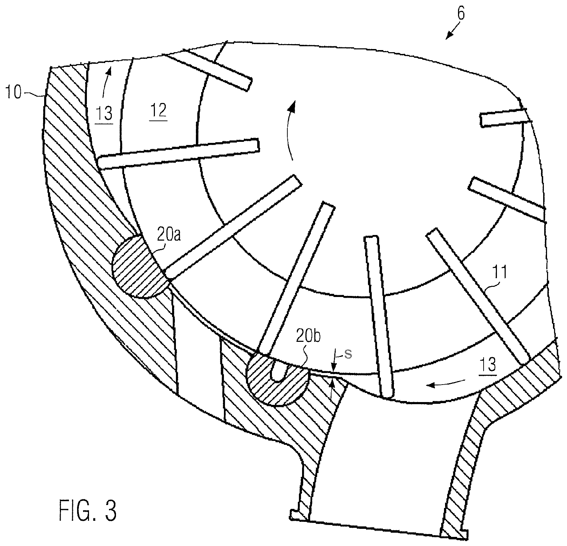

Fig. 3 zeigt eine weitere mögliche Ausführungsform gemäß der vorliegenden Erfindung. Fig. 3 zeigt einen Teil eines Querschnitts des Förderwerks 6 gemäß der vorliegenden Erfindung. Dieses Förderwerk 6 ist in diesem Fall eine Flügelzellenpumpe und weist ein Pumpengehäuse 10 und einen drehbar gelagerten Rotor 12 auf, der radial verschiebbar gelagerte Flügel 11 umfasst, die mit der Wandung des Pumpengehäuses Förderzellen bilden. Die Pumpe hat einen Saugbereich und einen Druckbereich sowie einen Dichtbereich, der den Druckbereich vom Saugbereich trennt. Zwischen Saugbereich und Druckbereich ist mindestens eine, hier zum Beispiel zwei Elastomerdichtungen 20a, 20b vorgesehen, die einen Spalt s zwischen dem Rotor 12 und der inneren Wandung des Pumpengehäuses 10 abdichten. Hier sind die Dichtungen in einer Aussparung im Pumpengehäuse 10 eingesetzt.

Auch hier muss eine Verkeimung wirksam verhindert werden, da pastöse Masse von den Flügeln 11 mitgeschleppt werden kann. Die Elastomerdichtung 20a,b ist aus einem Kunststoff bzw. Elastomer gebildet, dem ein antimikrobieller Stoff als Zusatz zugesetzt ist. Als Elastomer eignet sich hier insbesondere NBR mit einem antimikrobiellen Zusatz.

Die Konzentration des Zusatzes liegt zum Beispiel in einem Bereich von 1 bis 3 Gewichts-%. Auch dieses elastische Bauteil ist Druck und Verschmutzung ausgesetzt, so dass es auch hier besonders vorteilhaft ist, wenn die Oberflächenrauhheit R_{z} < 25 µm ist und die Oberfläche eine Härte von 70 bis 90 Shore A aufweist.

Das Bauteil (2a, 2b, 20a, 20b, 14 - 25) ist ein Bauteil im produktführenden Bereich (13), das mit Produkt in Berührung kommen kann und/oder eine Dichtung, die dem produktführenden Bereich (13) nach außen abdichtet.

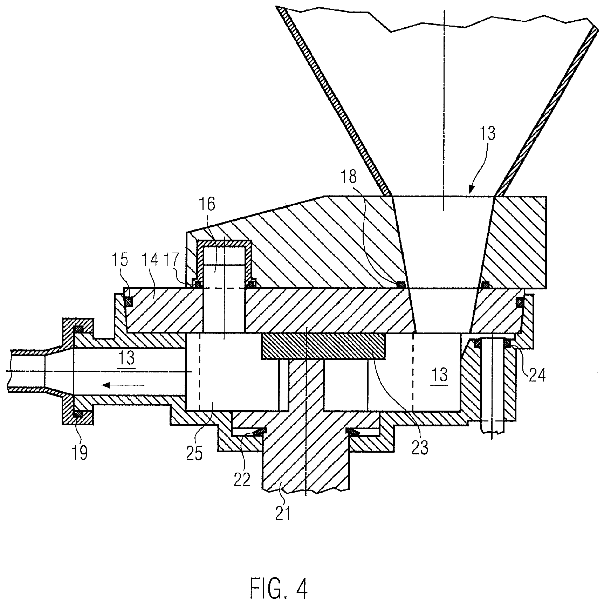

Neben den zuvor genannten Bauteilen können beispielsweise, wie in Fig. 4 dargestellt, folgende Bauteile einen antimikrobiellen Stoff umfassen: die Seitenscheibe (14), die die Flügelzellenpumpe nach oben hin abdeckt, die Dichtung (15) an der Seitenscheibe (14), die die Seitenscheibe (14) zum Pumpengehäuse hin abdichtet, ein Überdruckkolben (16), die Dichtung des Überdruckkolbens (17), Dichtung am Zuflusstrichter (18), Dichtung (19) am Auslass zu einem Füllrohr, Pumpenflügel (25) der Flügelzellenpumpe, Pumpenrotor (21) der Flügelzellenpumpe, Dichtung (22) am Pumpenrotor zum Abdichten von Pumpenrotor und Pumpengehäuse, Spannexzenter (23) der Flügelzellenpumpe, Dichtung (24) am Vakuumkolben.

Wenn auch in den Figuren nicht näher dargestellt, können auch zusätzlich neben den produktführenden Maschinenbereichen die Kunststoffbedienelemente der Maschine mit entsprechenden antimikrobiell bzw. antibakteriell optimierten Werkstoffen bzw. Werkstoffoberflächen ausgeführt sein. Dadurch kann zusätzlich der Gefahr einer möglichen direkten oder indirekten Kreuzkontamination/Keimverschleppung entgegengewirkt werden.

## Patentansprüche

1. Lebensmittelverarbeitende Maschine (1), in Form einer Füllmaschine zur Wurstherstellung, mit einem produktführenden Bereich (13) mit mehreren Bauteilen (2a, 2b, 20a, 20b, 14 - 25) aus Kunststoff wobei
mindestens ein Bauteil (2a, 2b, 20a, 20b, 14 - 19, 21 - 25) aus Kunststoff einen antimikrobiellen, insbesondere antibakteriellen Stoff umfasst, wobei die Oberfläche des Kunststoffbauteils (2a, 2b, 20a, 20b) eine Oberflächenrauheit R_{z} < 25 µm, insbesondere von R_{z} 2 µm bis R_{z} 8 µm aufweist und entweder
der Kunststoff ein Thermoplast ist, dessen Oberfläche eine Shore-Härte von 75 bis 90 Shore D aufweist, oder
der Kunststoff ein Elastomer ist, dessen Oberfläche eine Härte von 70 bis 90 Shore A aufweist, wobei der antimikrobielle Stoff als Zusatz in den Kunststoff eingebracht ist.

2. Füllmaschine (1) nach Anspruch 1, **dadurch gekennzeichnet, dass** das Bauteil (2a, 2b, 20a, 20b, 14 - 25) ein Bauteil im produktführenden Bereich (13) ist, das mit Produkt in Berührung kommen kann und/ oder eine Dichtung, die den produktführenden Bereich (13) nach außen abdichtet.

3. Füllmaschine (1) nach mindestens einem der vorhergehenden Ansprüche, **dadurch gekennzeichnet, dass** das Bauteil (2a, 2b, 20a, 20b, 14 - 25) eine Elastomerdichtung, insbesondere im Bereich des Förderwerks (8) einer Füllmaschine oder insbesondere im Bereich des Fülltrichters (3) der Füllmaschine (1) ist.

4. Füllmaschine (1) nach mindestens einem der vorhergehenden Ansprüche, **dadurch gekennzeichnet, dass** das Bauteil ein Abstreifer (2a) einer Förderkurve (6) im produktführenden Bereich (13) eines Fülltrichters (3) einer Füllmaschine (1) ist.

5. Füllmaschine (1) nach mindestens einem der vorhergehenden Ansprüche, **dadurch gekennzeichnet, dass** der antimikrobielle, bzw. antibakterielle Stoff mindestens ein Stoff aus der folgenden Gruppe ist: Nanometall, Biozid, Sterion.

6. Füllmaschine (1) nach mindestens einem der vorhergehenden Ansprüche, **dadurch gekennzeichnet, dass** der Kunststoff POM ist und der antimikrobielle Stoff auf Silberionen basiert.

7. Füllmaschine (1) nach mindestens einem der vorhergehenden Ansprüche, **dadurch gekennzeichnet, dass** das Bauteil ein Bauteil eines Vorsatzgerätes (9) der Füllmaschine (1) ist.

8. Füllmaschine (1) nach mindestens einem der Ansprüche 1 - 7, **dadurch gekennzeichnet, dass** der antimikrobielle Stoff dem Kunststoff mit einer Gewichtskonzentration von 1 bis 3 % zugesetzt ist.

## Claims

1. A food processing machine (1) in the form of a filling machine for sausage production, with a product handling area (13) with several components (2a, 2b, 20a, 20b, 14 - 25) made of a synthetic material, wherein
at least one synthetic material component (2a, 2b, 20a, 20b, 14 - 19, 21 - 25) includes an antimicrobial, in particular antibacterial, substance, wherein the surface of the synthetic material component (2a, 2b, 20a, 20b) has a surface roughness R_{Z} < 25 µm, in particular in the range of 2 µm to 8 µm and the synthetic material is either a thermoplastic, the surface of which has a Shore hardness of 75 to 90 Shore D, or
an elastomer, the surface of which has a hardness of 70 to 90 Shore A, wherein the antimicrobial substance is introduced into the synthetic material as an additive.

2. The filling machine (1) according to claim 1, **characterized in that**
the component (2a, 2b, 20a, 20b, 14 - 25) is a component in the product handling area (13) that can come into contact with the product and/or a seal that seals off the product handling area (13) against the outside.

3. The filling machine (1) according to at least one of the afore-mentioned claims, **characterized in that** the component (2a, 2b, 20a, 20b, 14 - 25) is an elastomer seal, in particular in the area of the conveying mechanism (8) of a filling machine or in particular in the area of the filling hopper (3) of the filling machine (1).

4. The filling machine (1) according to at least one of the afore-mentioned claims, **characterized in that** the component is a scraper (2a) of a conveying curve (6) in the product handling area (13) of a filling hopper (3) of a filling machine (1).

5. The filling machine (1) according to at least one of the afore-mentioned claims, **characterized in that** the antimicrobial, respectively antibacterial substance is at least one of the following substances: a nanometal, a biocide, a sterion.

6. The filling machine (1) according to at least one of the afore-mentioned claims, **characterized in that** the synthetic material is POM and the antimicrobial substance is silver ions-based.

7. The filling machine (1) according to at least one of the afore-mentioned claims, **characterized in that** the component is a component of an attachment (9) of the filling machine (1).

8. The filling machine (1) according to at least one of the claims 1 - 7, **characterized in that** the antimicrobial substance is added to the synthetic material in a weight concentration of 1 to 3%.

## Revendications

1. Machine de traitement de produits alimentaires (1) sous la forme d'une machine de remplissage pour la fabrication de saucisses avec une zone de passage de produit (13) avec plusieurs composants (2a, 2b, 20a, 20b, 14 - 25) en matière synthétique, où
au moins un composant (2a, 2b, 20a, 20b, 14 - 19, 21 - 25) en matière synthétique comprend une substance antimicrobienne, en particulier une substance antibactérienne, où la surface du composant en matière synthétique (2a, 2b, 20a, 20b) présente une rugosité de surface R_{Z} < 25 µm, en particulier de 2 µm à 8 µm et la matière synthétique est soit
une matière thermoplastique dont la surface présente une dureté Shore de 75 à 90 Shore D, soit
un élastomère dont la surface présente une dureté de 70 à 90 Shore A, où la substance antimicrobienne est introduite dans la matière synthétique en tant qu'additif.

2. Machine de remplissage (1) selon la revendication 1, **caractérisée en ce que** le composant (2a, 2b, 20a, 20b, 14 - 25) est un composant dans la zone de passage de produit (13) qui peut entrer en contact avec le produit et/ou un joint qui étanche la zone de passage de produit (13) par rapport à l'extérieur.

3. Machine de remplissage (1) selon au moins une des revendications précédentes, **caractérisée en ce que** le composant (2a, 2b, 20a, 20b, 14 - 25) est un joint élastomère, en particulier dans la région du mécanisme de convoyage (8) d'une machine de remplissage ou en particulier dans la région de la trémie de remplissage (3) de la machine de remplissage (1).

4. Machine de remplissage (1) selon au moins une des revendications précédentes, **caractérisée en ce que** le composant est un racloir (2a) d'une spirale de convoyage (6) dans la zone de passage de produit (13) d'une trémie de remplissage (3) d'une machine de remplissage (1).

5. Machine de remplissage (1) selon au moins une des revendications précédentes, **caractérisée en ce que** la substance antimicrobienne ou antibactérienne est au moins une substance parmi les suivantes : un nanométal, un biocide, un stérion.

6. Machine de remplissage (1) selon au moins une des revendications précédentes, **caractérisée en ce que** la matière synthétique est du POM et la substance antimicrobienne est à base d'ions d'argent.

7. Machine de remplissage (1) selon au moins une des revendications précédentes, **caractérisée en ce que** le composant est un composant d'un appareil accessoire (9) de la machine de remplissage (1).

8. Machine de remplissage (1) selon au moins une des revendications 1 - 7, **caractérisée en ce que** la substance antimicrobienne est ajoutée à la matière synthétique selon une concentration en poids de 1 - 3%.
